Europäisches Patentamt

European Patent Office

Office européen des brevets

(11) Veröffentlichungsnummer: **0 434 957 A1**

# (12) EUROPÄISCHE PATENTANMELDUNG

(21) Anmeldenummer: 90121769.5

(22) Anmeldetag: 14.11.90

(51) Int. Cl.⁵: **B29C 45/26**, B29C 45/34

(30) Priorität: 27.11.89 DE 3939195

(43) Veröffentlichungstag der Anmeldung:
03.07.91 Patentblatt 91/27

(84) Benannte Vertragsstaaten:
AT BE CH DK ES FR GB GR IT LI LU NL SE

(71) Anmelder: **Krauss-Maffei Aktiengesellschaft**
**Krauss-Maffei-Strasse 2**
**W-8000 München 50(DE)**

(72) Erfinder: **Lichtinger, Peter**
**Albrecht-Dürer-Strasse 4**
**W-8080 Fürstenfeldbruck(DE)**
Erfinder: **Ringelstetter, Gabriel**
**Hitlstrasse 67**
**W-8000 München 50(DE)**

(54) Büchse zum axialen Halten und radialen Zentrieren von Matrizen in einem Spritzgiesswerkzeug.

(57) Bei der Herstellung von scheibenförmigen Informationsträgern im Spritzgießverfahren besteht die Gefahr der Schlierenbildung in der Scheibe, was diese als Informationsträger unbrauchbar macht.

Aufgrund der Erkenntnis, daß die Schlierenbildung durch Luft verursacht wird, welche sich beim Spritzvorgang im Bereich des oberen Randes der Büchse (1) bildet und durch den Spritzdruck komprimiert wird, wird vorgeschlagen, diese Luft abzuführen, ohne daß die Zentrier- und Haltefunktion der Büchse beeinträchtigt wird und ohne daß die Einspritzzeit verlängert werden muß.

Fig. 3

Schnitt A-A

EP 0 434 957 A1

BÜCHSE ZUM AXIALEN HALTEN UND RADIALEN ZENTRIEREN VON MATRIZEN IN EINEM SPRITZGIESS-
WERKZEUG

Die Erfindung bezieht sich auf eine Büchse zum axialen Halten und radialen Zentrieren von Matrizen in einem Spritzgießwerkzeug gemäß dem Oberbegriff des Patentanspruchs 1.

Bei der Herstellung von scheibenförmigen Informationsträgern wie z.B. Compact Discs (CD), insbesondere mit einem Stapelwulst, können sich beim Spritzgießen in der Scheibe Schlieren bilden, welche die Scheibe als Informationsträger unbrauchbar machen. Man hat bereits versucht, die Schlierenbildung durch langsameres Einspritzen des Kunststoffes zu vermeiden oder wenigstens zu verringern. 'Eine derartige Zykluszeitverlängerung führt jedoch zu unvertretbar hohen Zykluszeiten, so daß eine solche Methode unwirtschaftlich ist.

Der Erfindung liegt daher die Aufgabe zugrunde, die Schlierenbildung bei der Herstellung von scheibenförmigen Informationsträgern zu vermeiden, ohne die normale Zykluszeit beim Spritzgießen zu verlängern, d.h. es soll unter normalen Einstellbedingungen eine sichere und reproduzierbare Herstellung ermöglicht werden.

Diese Aufgabe wird gemäß dem Kennzeichen des Patentanspruchs 1 gelöst. Der Lösung liegt die durch Versuche bestätigte Erkenntnis zugrunde, daß die Schlierenbildung durch Luft verursacht wird, welche sich beim Spritzvorgang im Bereich des oberen Randes der Büchse bildet und durch den Spritzdruck komprimiert wird. Die komprimierte Luft erzeugt die Schlieren, welche bis in den Informationsbereich der Scheibe hineinreichen und diese unbrauchbar machen. Versuche haben gezeigt, daß die Schlierenbildung verstärkt bei Informationsträgern mit Stapelwulst auftritt, d.h. durch veränderte Strömungsverhältnisse mit dem Effekt des Lufteinschlusses vor der Außenkante des Haltebundes bewirkt wird.

In vorteilhafter Ausbildung der Erfindung erfolgt die Abführung der Luft durch Kanäle an der Unterseite des Bundes der Büchse, und zwar ausgehend von dessen Außenkante bis zum Zentrierbereich für die Bohrung der Matrize.

Weitere vorteilhafte Ausgestaltungen der Erfindung, welche die Abführung der Luft aus dem Zentrierbereich begünstigen, ergeben sich aus den Unteransprüchen

In der Zeichnung ist ein Ausführungsbeispiel der Erfindung dargestellt.

Es zeigen:

Fig. 1 einen Teilquerschnitt eines Spritzgießwerkzeuges für scheibenförmige Informationsträger im Bereich der Büchse mit einem Haltebund gemäß dem Stand der Technik,

Fig. 2 einen Teilquerschnitt entsprechend Fig. 1, jedoch gemäß der Erfindung,

Fig. 3 eine Seitenansicht der Büchse gemäß der Erfindung,

Fig. 4 einen Querschnitt A-A durch die Büchse gemäß Fig. 3 im Zentrierbereich für die Bohrung der Matrize.

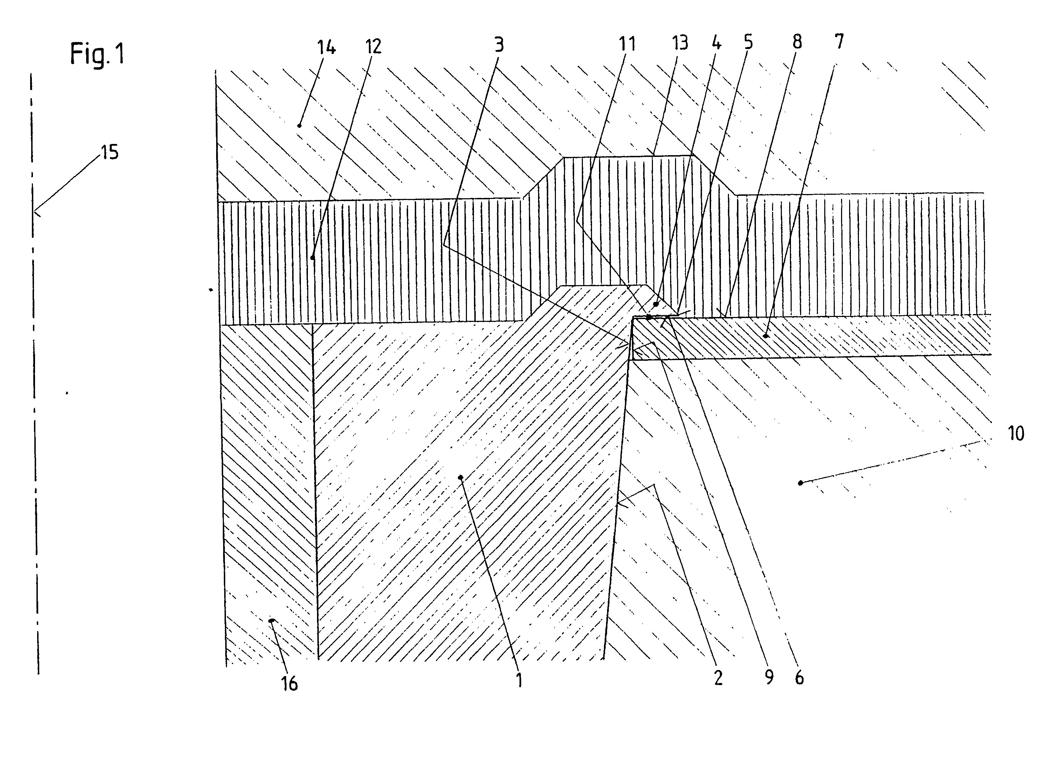

Eine Büchse 1 mit einer kegelförmigen Paßfläche 2, einem kegelförmigen Zentrierbereich 3, einem Bund 4 mit einer Außenkante 5 und einer Unterseite 6 hält eine Matrize 7 mit einer Oberseite 8 und einer Bohrung 9 auf einer Spiegelplatte 10 (Fig. 1). Zwischen der Unterseite 6 des Bundes 4 und der Oberseite 8 der Matrize 7 befindet sich ein Spalt 11.

Oberhalb der Büchse 1 und der Matrize 7 befindet sich eine Compact-Disc (CD) mit einem Stapelwulst 13. Die Oberseite der CD wird durch eine Spiegelplatte 14 geformt. Die strichpunktierte Linie 15 gibt die Lage der zentralen Werkzeugachse an. Position 16 bezeichnet eine Führungsbüchse.

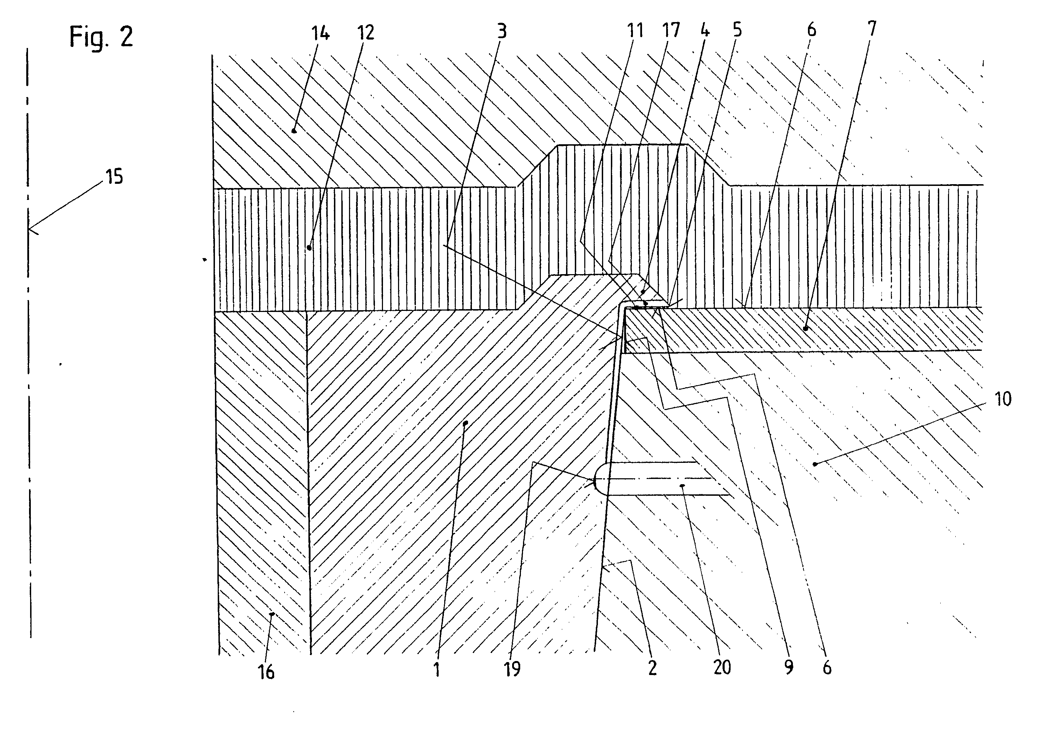

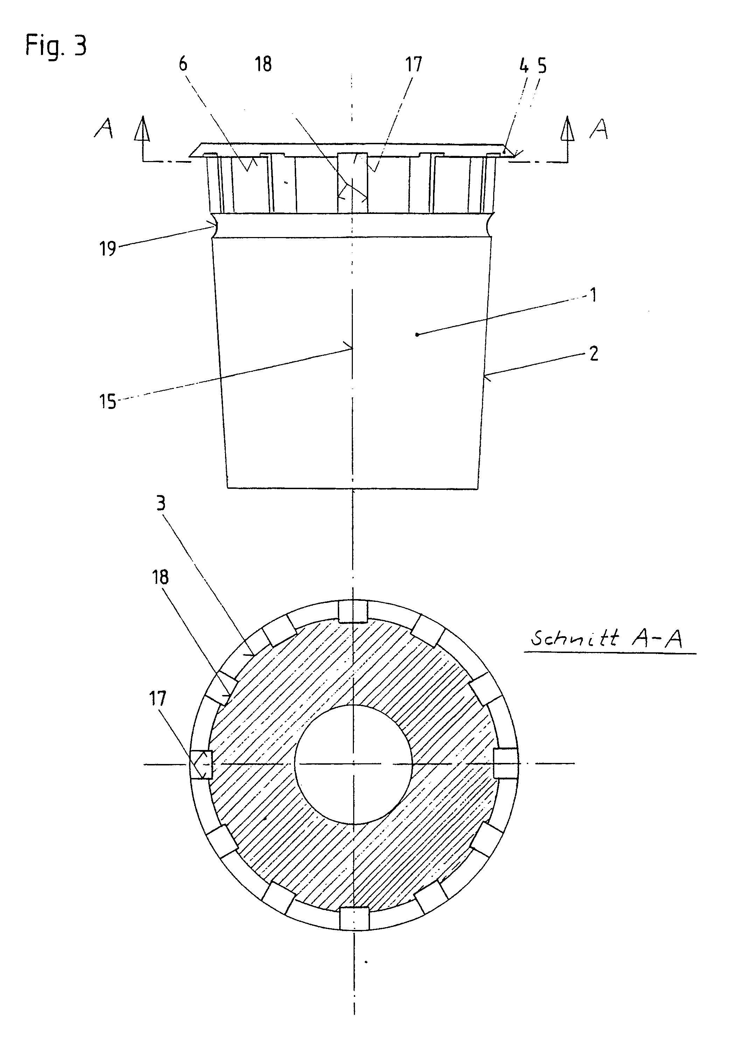

Gegenüber der Darstellung in Fig. 1 ist in Fig. 2 bis 4 die Büchse 1 mit Kanälen 17 und 18 sowie einem Sammelkanal 19 und einer Sammelleitung 20 versehen.

**Ansprüche**

1. Büchse zum axialen Halten und radialen Zentrieren von Matrizen in einem Spritzgießwerkzeug zur Herstellung von scheibenförmigen Informationsträgern, insbesondere Compact-Discs, mit einem umlaufenden Bund am oberen Rand der Büchse, dadurch gekennzeichnet, daß Mittel zur Abführung von Luft, die beim Spritzvorgang vor der Außenkante (5) des Bundes (4) oder/und in einem eventuellen feinen Spalt (11) zwischen der Unterseite (6) des Bundes (4) und der Matrizenoberseite (8) komprimiert wird, vorgesehen sind.

2. Büchse nach Anspruch 1, dadurch gekennzeichnet, daß ein oder mehrere Kanäle (17) an der Unterseite (6) des Bundes (4) von dessen Außenkante (5) bis zum Zentrierbreich (3) für die Bohrung (9) der Matrize (7) führen.

3. Büchse nach Anspruch 1 oder 2, dadurch gekennzeichnet, daß ein oder mehrere Kanäle (18) oder Bohrungen vom Zentrierbereich (3) für die Bohrung (9) der Matrize (7) weiterführen.

4. Büchse nach Anspruch 1 bis 3 oder einem derselben, dadurch gekennzeichnet, daß die Kanäle (18) bzw. Bohrungen in einen Sammelkanal (19) oder/und in eine Sammelleitung (20) münden.

5. Büchse nach Anspruch 4, dadurch gekennzeichnet, daß der Sammelkanal (19) und/oder die Sammelleitung (20) mit Raumluft verbunden sind.

6. Büchse nach Anspruch 5, dadurch gekennzeichnet, daß der Sammelkanal (19) oder/und die Sammelleitung (20) an ein Vakuum anschließbar ist.

EP 0 434 957 A1

Fig.1

Fig. 2

Fig. 3

Schnitt A-A

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 262 863  (K.K. MEIKI) <br> * Spalte 5, Zeilen 28-58; Spalte 6, Zeilen 1-8; Ansprüche 7-11; Figur 6 * <br> - - - | 1,5,6 | B <br> 29 C 45/26 <br> B 29 C 45/34 |
| A | AU-B-4 839 5  (MERCO TYRE & RUBBER CO.) <br> * Ansprüche 4,5 * <br> - - - | 1,2,4,5,6 | |
| A | US-A-4 374 636  (DISCOVISION ASSOCIATES) <br> * Anspruch 2; Spalte 5, Zeilen 23-50; Figur 7 * <br> - - - - - | 2,3 | |

RECHERCHIERTE SACHGEBIETE (Int. Cl.5)

B 29 C
B 29 D

Der vorliegende Recherchenbericht wurde für alle Patentansprüche erstellt

| Recherchenort | Abschlußdatum der Recherche | Prüfer |
|---|---|---|
| Den Haag | 01 März 91 | LANASPEZE J-P.Y. |